# EUROPEAN PATENT APPLICATION

(11) **EP 3 995 377 A1**
(43) Date of publication of application: **11.05.2022**
(21) Application number: 21202868.2
(22) Date of filing: 15.10.2021
(51) Int. Cl.: B60W 30/18, B60W 60/00, G05D 1/00, G05D 1/02, G06N 3/08

(54) **LATENCY MITIGATION SYSTEM AND METHOD**

(30) Priority: 10.11.2020 GB 202017704
(71) Applicant: Sony Interactive Entertainment Inc., Tokyo 108-0075 (JP)
(72) Inventor: CAPPELLO, Fabio, London, W1F 7LP (GB); VILLANUEVA-BARREIRO, Marina, London, W1F 7LP (GB); MOSS, Guy, London, W1F 7LP (GB)
(74) Representative: D Young & Co LLP

(57) **Abstract**

A system for training a model to select actions to be taken by an agent within an environment, the system comprising a state determination unit operable to determine a state of the environment, a latency determination unit operable to determine a latency associated with interactions between the agent and the environment, an action determination unit operable to determine one or more actions to be performed by the agent in dependence upon the state, wherein actions are determined for each of one or more latencies determined by the latency determination unit, an action evaluation unit operable to evaluate the success of each of the actions, and a generation unit operable to generate the model in dependence upon identifying correlations between the success of each of the actions and the determined latency associated with those actions, so as to identify an action to be taken by the agent in dependence upon both a determined state and a latency.

## Description

### BACKGROUND OF THE INVENTION

### Field of the invention

This disclosure relates to a latency mitigation system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Latency is an issue that arises in a number of different scenarios, and can cause operation issues to occur in those scenarios. For instance, in online gaming it is common that latency arising from a poor internet connection can cause a user to experience significant frustration (and potentially disconnects from a gaming environment) due to a delay being introduced between a user's inputs and the response of the game to those inputs. Similarly, latency issues may occur due to hardware limitations of a processing device that is used to execute an application - latency is not limited to being caused by a poor network connection.

Of course, latency is not an issue that is limited to online gaming. Other applications may also be impacted by latency, and in some cases the operation of physical devices may also be impacted. For instance, a drone or robotic assistant may have a reduced performance due to latency. This reduction in the performance of a device may be reflected in poor navigation or reaction to changes in the environment, for example.

In view of the above considerations, it is clear that it would be desirable to be able to mitigate the problems caused by such latency. It is in the context of this desire that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an environment;
Figure 2 schematically illustrates the environment with a plurality of paths;
Figures 3A and 3B schematically illustrate a latency issue in the environment;
Figure 4 schematically illustrates an alternative path;
Figure 5 schematically illustrates several alternative paths each associated with different latencies;
Figure 6 schematically illustrates alternative paths that may be implemented;
Figure 7 schematically illustrates a training method;
Figure 8 schematically illustrates an implementation method;
Figure 9 schematically illustrates a system for training a model;
Figure 10 schematically illustrates a system for selecting an action to be taken;
Figure 11 schematically illustrates a method for training a model; and
Figure 12 schematically illustrates a method for selecting an action to be taken.

### DESCRIPTION OF THE EMBODIMENTS

Referring now to the drawings, wherein like reference numerals designate identical or corresponding parts throughout the several views, embodiments of the present disclosure are described.

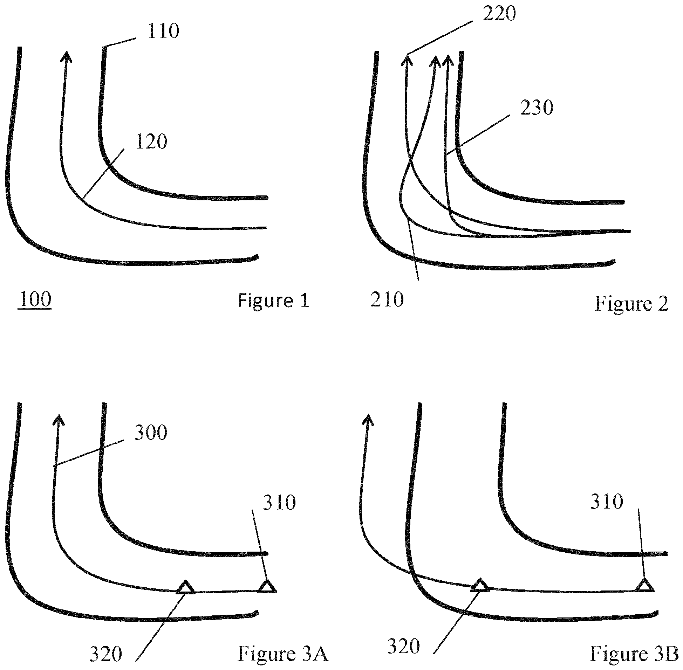

Figure 1 schematically illustrates an environment in which control is to be performed for navigational purposes. In particular, the environment 100 includes a segment of road 110 (specifically a bend in the road) and a path 120 along the road. This segment of road 110 may be real or virtual; or in some cases (such as augmented reality applications) there may be elements of both real and virtual environments that are considered to make up the environment. In the former case, the path 120 may represent a route taken by a physical device (such as a car or drone) along the road 110 while in the latter case the path 120 may represent the path taken by a virtual agent (such as a car or a virtual person).

In some cases the path 120 may be predefined by a programmer or the like; for instance, if a vehicle is travelling around a predefined course then it may be appropriate to define a path that is to be followed by the agent. However, in many cases a more flexible approach may be desired. In such cases the use of an artificial intelligence or machine learning approach may be considered appropriate; these may enable an agent to be trained so as to be able to determine a course of action to be taken in a more flexible manner. This is because the agent is not bound to take a predetermined route, and is instead trained so as to select an appropriate route based upon one or more parameters identified within the environment (such as the shape of the road 110, to refer to the example of Figure 1).

One example of an implementation of this is the use of a reinforcement learning agent. A reinforcement learning agent is an agent that is trained based upon a number of iterations of a scenario, with a score being assigned to the outcome of each iteration to indicate the success of the agent (or the lack thereof). In this way, an agent is able to determine, based upon a number of iterations, which behaviour corresponds to a greater level of success and which does not. In general, the outcome of each iteration is considered when determining an approach to be taken in following iterations. In this way, behaviour that leads to (at least relative) success can be reinforced in preference to other behaviour.

This can lead to the determination of an optimal action (or set of actions) being identified, or at least an action that satisfies one or more conditions. Such conditions may relate to the achieved 'score' (that is, the level of success) and the time taken (and/or number of actions) to achieve that score, for example.

Figure 2 schematically illustrates the environment 100 with a plurality of paths 210, 220, and 230. These paths are representative of different iterations that may be undertaken by a reinforcement learning agent tasked with navigating the road 110. Any number of paths may be undertaken to determine a preferred path; the fact that only three are shown in Figure 2 should not be considered to be limiting. In each case, a determination of the success of each path is made; exemplary criteria for assessing this may be the speed of the agent upon leaving the bend, the time taken to traverse the bend, and/or how likely the agent would be to be overtaken on the bend based upon the road position. Each of these criteria may have a different weighting as appropriate, reflecting the importance of that criterion in determining the success of the chosen path.

For instance, the path 210 may be determined to be good in that the exit speed of the agent is likely to be high, but bad in that the time taken to traverse the bend would likely be high. Similarly, the path 230 may be considered to be less than ideal due to having to slow down to traverse the bend more precisely - thereby increasing the time taken to traverse the bend. The path 220 may be considered to be a reasonable compromise between the two, and as a result may have a higher success value (depending on the weighting of the factors considered for evaluating the success of the path). By performing a number of different iterations so as to test a number of different paths, a well-designed reinforcement learning process should tend towards an optimal or otherwise suitable solution - in this case, a path that best balances the requirements of speed and time taken (and the like).

Of course, this example is only to provide context for the discussion of a reinforcement learning agent. Reinforcement learning agents may be trained so as to navigate a number of different obstacles - and are not necessarily limited to navigation applications. For instance, reinforcement learning agents may be used to play games such as chess. It is therefore apparent that reinforcement learning agents may be trained to perform a number of different tasks, and as such the present discussion (while focusing on the example of navigation so as to aid clarity) should not be considered to be limited in terms of the tasks to which it can be applied.

In chess, as in a number of different applications, the training of an agent (and indeed use) is performed in an asynchronous manner. That is to say that the decision making is performed separately to the actions - in chess, the game is effectively paused while the agent determines which move to make as the game rules prohibit the other player from performing an action while waiting. Similarly, processing may be paused during the decision making process for an agent in other examples - for instance, when training an agent to perform a navigation function the agent is able to stop (or gameplay can be paused, for example) and consider the next move rather than consider the next move while in motion.

While this may be appropriate in a number of cases, such an implementation may have a number of drawbacks. One such drawback is that of applications that do not use a turn-based or otherwise discrete time series in which the actions are to be performed. In such applications an agent may not act appropriately due to latency - within the period of time equal to the latency, the environment (as well as the agent's own situation, such as position, within the environment) may change. This may lead to poor (or at least worse) decisions to be made, due to the use of outdated information in making the decision.

Figures 3A and 3B together schematically illustrate an example of this in the context of the Figures discussed above. In Figure 3A, the road 110 is shown with a path 300, a decision point 310, and an execution point 320. The path 300 is an example of a suitable route that the agent may take to navigate the bend in the road 110.

The decision point 310 represents the position of the agent when then bend in the road 110 is analysed for the purpose of determining changes to navigation to be implemented; the execution point 320 represents the position of the agent when the determined navigation changes are implemented. The difference in position between these points 310 and 320 represents the motion of the agent during the decision making process.

Figure 3B shows the path 300 shifted to represent the difference in location between the decision point 310 and the execution point 320 when the latency associated with the agent is at a higher value. Due to the difference in location between these points, the path 300 now strays from the road 110; it is clear that the path 300 is therefore not fit for purpose due to the motion during the decision making process. The time for the decision making process to be implemented in such an example may include processing time, information gathering/reception time, and instruction communication/implementation time, for instance.

One potential solution for this is to seek to obtain information such that the decision making process may begin (and conclude) earlier - this would enable the action to be performed sooner, and may reduce the likelihood of a problem being encountered. However, in many cases this may not be possible
- for example, in the context of navigation along a road, two successive bends may be sufficiently close together so as to make it impossible to obtain information (without prior knowledge of the road layout) sufficiently early so as to allow an early decision to be made.

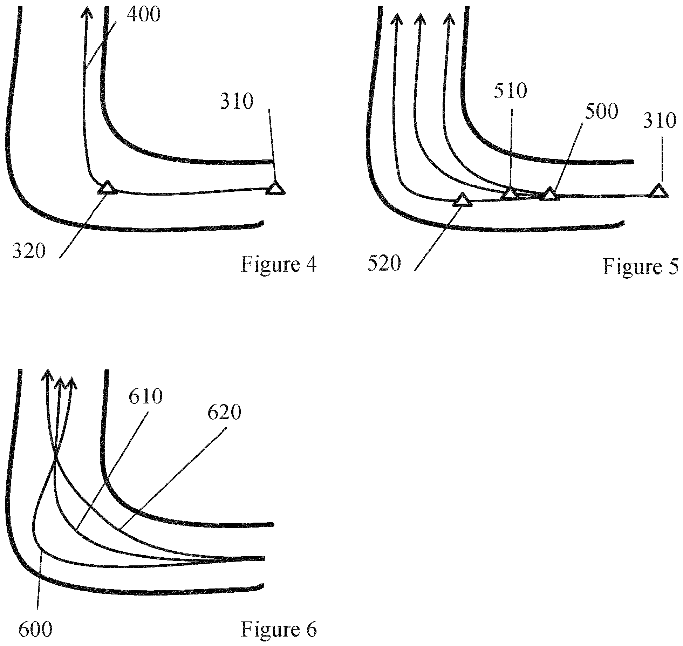

Figure 4 schematically illustrates an alternative path 400 that may be implemented under the same conditions as those discussed with respect to Figures 3A and 3B. In this example, the same difference between the decision point 310 and execution point 320 is present - however, the path 400 does not stray from the road as in the example of Figure 3B. This is because while the execution point 320 is the same, the path 400 has a much sharper turn that enables the agent to stay within the boundaries of the road 110. It is therefore considered that the road 110 may be navigated successfully despite this latency (the time between the decision point 310 and the execution point 320), if the latency is factored into the decision.

Figure 5 schematically illustrates several alternative paths for navigating the same bend that may be considered by an agent under a selection of different latency conditions. The different latency conditions are represented by the locations of the execution points 500, 510, and 520 which represent increasing latencies. As is apparent from the Figure, execution point 500 is associated with the smallest latency (as it is the nearest to the decision point 310) and as such the change in navigation is able to be initiated at an earlier time than in the comparable examples. In contrast to this, the execution point 520 is associated with the highest latency (as it is the furthest from the decision point 310) and as such the change in navigation is not initiated until a much later time. This results in the agent performing a much sharper turn than when the latency is smaller (that is, than when the execution points 500 or 510 are used).

Figure 6 schematically illustrates several alternative paths that may be considered by an agent under a selection of different latency conditions in a scenario in which the latency is smaller relative to the time required to implement an action. In this case, this is a scenario in which the latency is relatively small compared to the time taken to navigate the bend in the road 110.

In this example, the first path 600 represents a path that is to be taken when there is known to be a low latency. In this case, the change in direction is initiated at a later time as it is known that the agent is able to react to changing conditions and received inputs in a prompt manner. That is to say that it is known that the agent is able to execute changes (such as turning) quickly, and as such decisions can be postponed to a more optimal time.

In contrast to this, the third path 620 represents a path that is to be taken when there is known to be a high latency. In this case, the change in direction is initiated at an earlier time as it is known that the agent is not able to react to changing conditions and received inputs in a prompt manner. This means that opportunities for steering are relatively limited later in the navigation, as a late execution of an intended action can lead to poor performance (as discussed with reference to Figures 3A and 3B above). It is therefore considered that initiating the steering at an earlier time is advantageous; while this may lead to sub-optimal performance, the results may be better than what would otherwise be considered optimal given the latency that is present.

The second path 610 illustrates an alternative route that may be considered under intermediate latency conditions between those associated with the paths 600 and 620.

Of course, lower latency does not necessarily mean that the action has to be taken as late as possible; in some cases, it may be considered that the optimal path is that of the path 610. In such a case, this may be determined in the lowest latency scenario and the path 600 would instead be the same as the path 610. That is to say that the below a particular threshold of latency, the actions taken may all be the same as the latency may be low enough that a preferred (or apparently optimal) route is able to be implemented freely.

Problems resulting from latency are of course not limited only to navigation; this is discussed only as an example to demonstrate the nature of the problems caused by latency. For instance, in a football game it is considered that the timing of a pass or shot is rather important and as such there are similar considerations in respect of taking such an action. In terms of real-world applications, any action may have a time-dependency that can lead to an impact from latency in the system; while navigation is the primary action considered in the present disclosure, it should be appreciated that the teachings can be extended to other actions freely.

Given that latency conditions may vary between different computing arrangements and network capabilities, and may not even be consistent throughout the use of an application (for example, due to varying network conditions and/or computing loads), it is considered advantageous that an agent is able to determine and account for non-predetermined latencies during operation. As is apparent from consideration of Figures 5 and 6, the determination of an appropriate course of action may be rather complex given varying environmental and latency conditions. It is therefore considered suitable to train a machine learning agent to determine an appropriate course of action; such an approach can enable a robust model to be implemented that is able to successfully handle a range of different (and potentially varying) latencies.

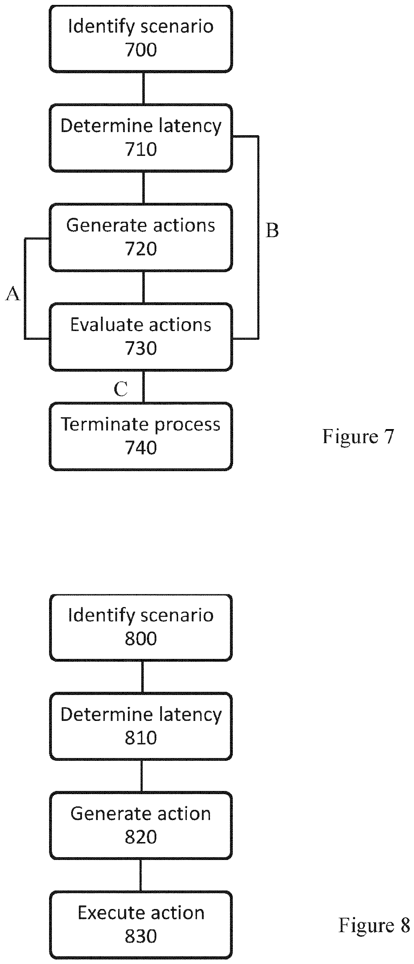

Figure 7 schematically illustrates a training method for a reinforcement learning agent; comparable methods may be used to train any other suitable machine learning model, and as such the present disclosure should not be considered to be limited to implementations based upon the use of a reinforcement learning agent. Such a training process may be performed by running a number of virtual simulations or by running software multiple times under different conditions, or may be performed using real-world tests as appropriate.

At a step 700, an identification of the scenario is performed. In this context, the scenario is the problem to be solved by the agent, such as the navigation of the bend in the road in the examples described above. Identifying the scenario may include the identification of any relevant characteristics of the environment; this may include physical features (such as terrain and surface information), desired outcomes (such as a target location to reach), agent parameters (such as movement speed, capabilities, and/or battery power) and/or any other characteristics. These characteristics may form inputs to the model that are used to determine an appropriate action to take. In many embodiments, the identification is guided by the general intent, capabilities, or use of the agent - for instance, a drone may identify different environmental features (such as building height) to a self-driving car and omit identification of others (such as a road layout).

At a step 710, a determination of the latency in the system is performed. In some cases, this may comprises only an identification of existing latency in the system by performing one or more of hardware and network tests (for example). However, in a number of cases this may comprise a setting of a latency or an apparent latency as appropriate. For instance, changes may be made to a physical arrangement to change an actual latency that is experienced by an agent (such as a reduction in processing power or the like). Alternatively, or in addition, an artificial latency may be introduced via software modifications - for instance, a selected time delay (such as a number of frames or milliseconds) may be inserted between identification and action steps 700 and 720.

At a step 720, one or more actions are generated and performed by the agent. These actions are generated in dependence upon the scenario as identified in step 700; the determined latency from step 710 may also serve as an input to the action generation process, although in other cases this may simply be used as a metadata used to derive patterns in behaviour for different latencies.

At a step 730, an evaluation of the actions generated in the step 720 is performed. The parameters by which the actions are judged may be defined or derived in any suitable manner - these may be dependent upon properties of the agent or the scenario, for instance. As discussed above, in a navigation embodiment parameters such as final speed and time taken may be considered in the evaluation.

At the conclusion of the step 730, one of three options may be selected for proceeding with the method.

A first option, denoted by the letter A in the Figure, is that of proceeding to step 720 and generating a new action to be taken. This option is selected so as to generate a new course of action to be taken by the agent for comparison to the one or more actions already evaluated. Option A may be selected any number of times so as to iteratively generate actions for the determined latency that meet or exceed a threshold evaluation result, for instance. Alternatively, this may be performed until the repeated iterations consistently offer no improvement in terms of the evaluation, until all (or a threshold number of) possible actions have been tested, and/or any other conditions suitable for the given scenario.

A second option, denoted by the letter B in the Figure, is that of proceeding to step 710 and determining a new latency with which to generate actions for the scenario. This enables the agent to generate sufficient data so as to be able to robustly react to a scenario for a range of different latencies.

A third option, denoted by the letter C in the Figure, is that of terminating the process by proceeding to step 740. This option is selected once the above steps have been iterated a suitable number of times for each latency so as to generate an appropriate model for use.

At a step 740, the process is terminated for the given scenario and the results of the process are stored for future use; this may include one or more aspects of a trained reinforcement learning agent, for instance. Such a process may be implemented any number of times for different scenarios, so as to build up a model that is robust and able to handle a range of different scenarios.

While discussed above with training being performed on a per-action or per-scenario basis, the training process may of course be implemented on any suitable scale. For instance, in the navigation examples discussed with reference to the Figures above the training may incorporate an entire racetrack or a series of turns rather than an individual bend. While more time-consuming, this may result in an improved performance as there may be a dependence between different actions to be performed in succession - for instance, the ideal speed and road position after a bend may be at least partly dependent upon the layout of the road after the bend.

As noted above, alternative methods for training a model may be implemented where appropriate. For instance, a supervised learning approach may be taken in which information is input upon which a model may be based. For instance, in a driving game playthrough data for a skilled player (demonstrating good navigation) may be provided as an input - a model may then be generated which can learn to mimic this playthrough data under varying latency conditions so as to determine how to handle varying latency. Alternatively, or in addition, the playthrough data could be generated and provided with a range of different latencies so as to provide a ground truth for each case. This playthrough data can then be optimised and/or extrapolated as appropriate to generate a robust model for performing a navigation process under different latency conditions.

Figure 8 schematically illustrates an implementation method for using a model such as that generated in accordance with the method of Figure 7.

At a step 800, a scenario is identified. This may be performed in a similar manner to the step 700 of Figure 7 as discussed above.

At a step 810, a latency associated with the system is determined. This may be performed in real-time such that it is constantly updating throughout the implementation, or may be determined in conjunction with the identification of the scenario only. In some embodiments, this may comprise a single latency measurement that is considered to apply for the entire action identification/execution process (or longer). Alternatively, or in addition, a latency measurement may be performed that identifies an average latency that is experienced, or a peak latency; similarly, any of these measurements may be used to calculate a 'safe' latency that can be assumed. In this context, a 'safe' latency is a latency that is sufficiently high so as to exceed any latency that is experienced by the system despite fluctuations (or at least to exceed the potential latency an above-threshold amount of the time, based upon a statistical analysis of fluctuations or other assumptions that may be made).

In some embodiments a latency may instead be determined that has little bearing on the hardware and/or network conditions, and instead is simply set to a preferred or otherwise acceptable level. One example of a benefit resulting from this feature is that of setting a higher latency than is likely to be experienced and implementing a corresponding reduction in the frequency with which the present process is performed. That is to say that an identification may be performed with a lower frequency (sparser intervals), but with a higher apparent latency to compensate. In this manner, a more efficient use of the model may be obtained without causing significant problems (although agent performance may be negatively impacted) as would usually be expected from an increased latency due to the robustness of the generated model.

At a step 820, an action is identified by the model in dependence upon the identified scenario and the determined latency. That is to say that an action is selected by the model that is able to be implemented effectively in view of both the environmental and agent conditions (such as obstacles to be navigated about and an initial movement speed) and the latency that is experienced by the agent. The appropriateness of different paths is considered above with reference to Figures 5 and 6, for example.

In addition to identifying the action, in some embodiments this step may also include determining an appropriate time to execute the action - this may be particularly useful when non-immediate execution is preferred (such as a delayed turn), or when the apparent latency is higher than the actual latency (where it may be preferable to delay the execution by an amount of time equal to the difference between the actual and expected latency).

At a step 830, the identified action is executed by the agent at the appropriate time as determined in step 820.

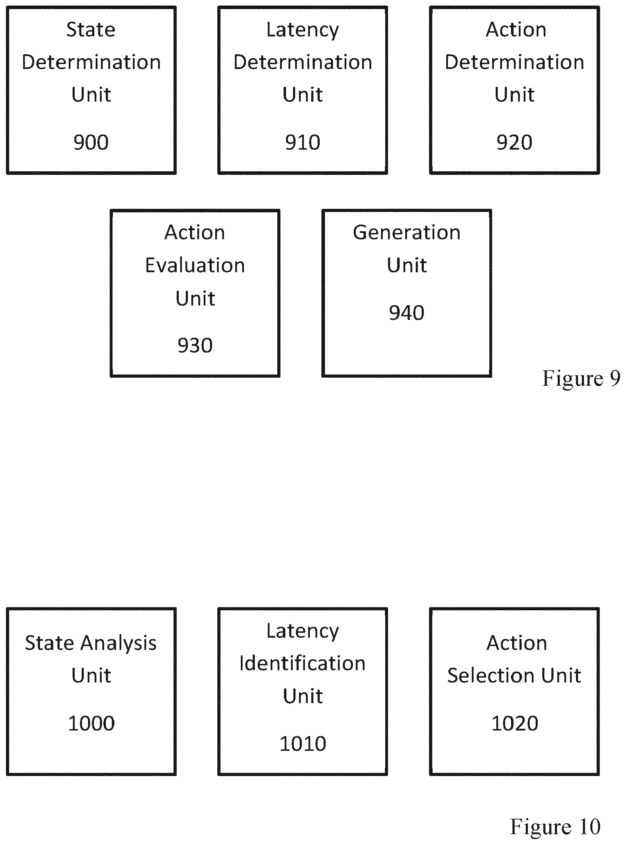

Figure 9 schematically illustrates a system for training a model to select actions to be taken by an agent within an environment (which may be real or virtual) in accordance with a number of the embodiments as described above. The system includes a state determination unit 900, a latency determination unit 910, an action determination unit 920, an action evaluation unit 930, and a generation unit 940. In some embodiments the system of Figure 9 is configured to perform a method in accordance with Figure 7, for example. In some embodiments, the model is a reinforcement learning agent; alternatively, supervised learning models may be used, or any other suitable type of model as appropriate.

The state determination unit 900 is operable to determine a state of the environment; in a number of embodiments, the state determination unit 900 is also operable to determine a state of the agent within the environment. Identifying the state of the environment may include the identification of any relevant characteristics; this may include physical features (such as terrain and surface information) and desired outcomes (such as a target location to reach) for example. The state of the agent may be represented by one or more agent parameters (such as movement speed, capabilities, and/or battery power) and/or any other characteristics that do not relate specifically to the environment.

The latency determination unit 910 is operable to determine a latency associated with interactions between the agent and the environment. The latency determination unit 910 may be operable to determine a latency comprising one or both of network latency and processing latency. This determination of the latency may include the specifying of a different latency to be associated with different actions within the environment; such a feature is discussed above with reference to step 710 of Figure 7. Such a determination may be performed using any suitable method of introducing a delay between the identification of the state of the environment and the execution of a determined action; this may include software and/or hardware modifications, for instance.

The action determination unit 920 is operable to determine one or more actions to be performed by the agent in dependence upon the state, wherein actions are determined for each of one or more latencies determined by the latency determination unit. In this context, actions may comprise a number of different inputs or the like - each of the actions may be considered as a set of inputs or interactions so as to navigate about, or otherwise act within, the environment. The action determination unit 920 may therefore be operable to generate one or more actions that each take a different approach with the task to be undertaken within the environment, rather than simply generating a single approach that comprises multiple actions. These different approaches may be compared to determine a preferred or optimal action for the environment state.

In some embodiments, the action determination unit 920 is operable to determine actions to be performed in dependence upon an evaluation, by the action evaluation unit 930, of one or more earlier actions that were determined by the action determination unit. In such embodiments, the iterations may therefore have a dependency between them such that behaviour associated with positively evaluated actions (such as those with an above threshold score) is reproduced in later actions more frequently than behaviour associated with less-positively evaluated actions.

The action evaluation unit 930 is operable to evaluate the success of each of the actions; this may be performed based upon a predicted success based upon input parameters, or based upon an execution of the actions within the environment, for instance. In some embodiments, the action evaluation unit 930 is operable to assign a score to each action determined by the action determination unit, the score being indicative of the action's compliance with one or more conditions for success. Conditions for success may include one or more parameters associated with the agent and/or one or more rules relating to objectives associated with the agent; as discussed above in the context of navigation, a travel time may be a suitable parameter. Similarly, any other conditions that relate to a measure of efficiency or effectiveness of the actions being considered may be considered to be examples of appropriate parameters.

The generation unit 940 is operable to generate the model in dependence upon identifying correlations between the success of each of the actions and the determined latency associated with those actions, so as to identify an action to be taken by the agent in dependence upon both a determined state and a latency.

The arrangement of Figure 9 is an example of a processor (for example, a GPU and/or CPU located in a games console or any other computing device) that is operable to train a model to select actions to be taken by an agent within an environment, and in particular is operable to:
determine a state of the environment;
determine a latency associated with interactions between the agent and the environment, wherein the latency determination unit is operable to vary the latency;
determine one or more actions to be performed by the agent in dependence upon the state, wherein actions are determined for each of one or more latencies determined by the latency determination unit;
evaluate the success of each of the actions; and
generate the model in dependence upon identifying correlations between the success of each of the actions and the determined latency associated with those actions, so as to identify an action to be taken by the agent in dependence upon both a determined state and a latency

Figure 10 schematically illustrates a system for selecting an action to be taken by an agent within an environment. The system comprises a state analysis unit 1000, a latency identification unit 1010, and an action selection unit 1020. In some embodiments the system of Figure 10 is configured to perform a method in accordance with Figure 8, for example. As noted above, the environment may be a real-world environment or a virtual environment; in some embodiments the environment may be used for an augmented reality or mixed reality application - as such, the environment may comprise both real and virtual elements.

The state analysis unit 1000 is operable to analyse a state of the environment. The operation of the state analysis unit 1000 is considered to be comparable to the operation of the state determination unit 900, in that an assessment of an environment is performed. In real-world applications, this may comprise the use of inputs such as captured images of the environment to derive one or more properties of the environment. Similarly, in virtual applications this may comprise any suitable analysis of the virtual environment - such as performing an image analysis on a rendered image or the like. In either case, the state analysis unit 1000 may also be operable to obtain one or more parameters associated with the agent itself, such as battery level, physical properties, and/or capabilities.

The latency identification unit 1010 is operable to identify a latency associated with the agent in the virtual environment. While in some cases this step may comprises a measuring of the actual latency that is being experienced by the agent, in other embodiments the identified latency is not the same as this measured latency. For instance, in some embodiments the identified latency may be a peak latency experienced by the agent, an average latency, or a latency that is sufficiently high so as to exceed any latency that is experienced by the system despite fluctuations. It is therefore apparent that in some embodiments the identified latency is higher than a latency associated with the agent in the environment.

The action selection unit 1020 is operable to select an action to be taken in dependence upon the state of the environment and the identified latency, the action being selected using a model trained by a system according to Figure 9 for example. This action may then be implemented by the agent within the environment.

The systems of each of Figures 9 and 10 may be implemented in respective devices, and executed by a respective processing element. Alternatively, in some embodiments a distributed processing approach may be taken; for instance, some or all of the processing may be offloaded to a cloud processing system that is accessed via a network connection as appropriate. An example of this is an implementation of the system of Figure 10 in which a drone is operable to identify a latency itself, but the state analysis and action selection is performed by an associated computing device that is separate to the drone or a cloud computing arrangement. This is to say that rather than being limited to the configurations shown in the Figures, the hardware implementation may be provided in any suitable fashion as appropriate for a given application.

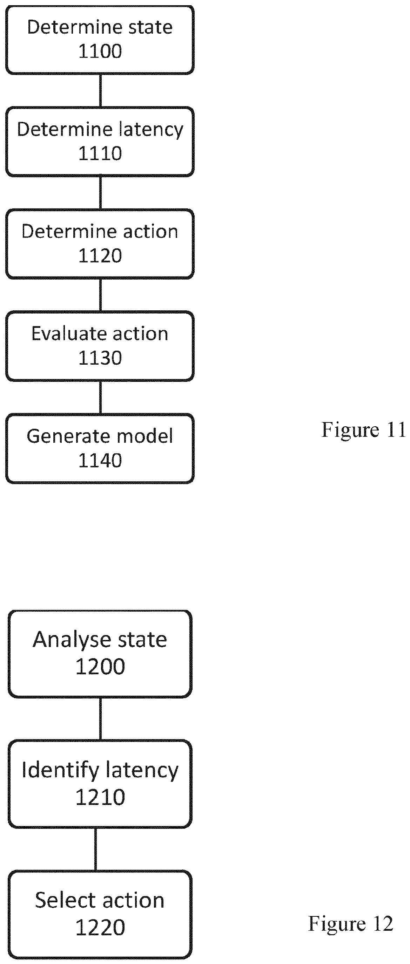

Figure 11 schematically illustrates a method for training a model to select actions to be taken by an agent within an environment. This method may be implemented by the hardware discussed with reference to Figure 9, for example.

A step 1100 comprises determining a state of the environment (which may be a real-world or virtual environment, or comprise elements of each); in some embodiments this may further comprise determining a state and/or one or more properties of the agent itself within the environment.

A step 1110 comprises determining one or more respective latencies associated with interactions between the agent and the environment.

A step 1120 comprises determining one or more actions to be performed by the agent in dependence upon the state, wherein actions are determined for each of the one or more determined latencies.

A step 1130 comprises evaluating the success of each of the actions that are determined in the step 1120.

A step 1140 comprises generating the model in dependence upon identifying correlations between the success of each of the actions and the determined latency associated with those actions, so as to identify an action to be taken by the agent in dependence upon both a determined state and a latency.

Figure 12 schematically illustrates a method for selecting an action to be taken by an agent within an environment. This method may be implemented by the hardware discussed with reference to Figure 10, for example.

A step 1200 comprises analysing a state of the environment (which may be a real-world or virtual environment, or comprise elements of each); in some embodiments this may further comprise determining a state and/or one or more properties of the agent itself within the environment.

A step 1210 comprises identifying a latency associated with the agent in the virtual environment; as discussed above, the identified latency may differ from the latency that is actually experienced by the agent where appropriate.

A step 1220 comprises selecting an action to be taken in dependence upon the state of the environment and the identified latency, the action being selected using a model trained in accordance with a method according to Figure 11 for example. The action is then executed by the agent at an appropriate time so as to achieve the desired result.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for training a model to select actions to be taken by an agent within an environment, the system comprising:
a state determination unit operable to determine a state of the environment;
a latency determination unit operable to determine a latency associated with interactions between the agent and the environment;
an action determination unit operable to determine one or more actions to be performed by the agent in dependence upon the state, wherein actions are determined for each of one or more latencies determined by the latency determination unit;
an action evaluation unit operable to evaluate the success of each of the actions; and
a generation unit operable to generate the model in dependence upon identifying correlations between the success of each of the actions and the determined latency associated with those actions, so as to identify an action to be taken by the agent in dependence upon both a determined state and a latency.

2. A system according to claim 1, wherein the environment is a virtual environment.

3. A system according to any preceding claim, wherein the state determination unit is operable to determine a state of the agent within the environment.

4. A system according to any preceding claim, wherein the action determination unit is operable to determine actions to be performed in dependence upon an evaluation, by the action evaluation unit, of one or more earlier actions that were determined by the action determination unit.

5. A system according to any preceding claim, wherein the action evaluation unit is operable to assign a score to each action determined by the action determination unit, the score being indicative of the action's compliance with one or more conditions for success.

6. A system according to claim 5, wherein conditions for success include one or more parameters associated with the agent and/or one or more rules relating to objectives associated with the agent.

7. A system according to any preceding claim, wherein the model is a reinforcement learning model.

8. A system according to any preceding claim, wherein the model is a supervised learning model.

9. A system according to any preceding claim, wherein the latency determination unit is operable to determine a latency comprising one or both of network latency and processing latency.

10. A system for selecting an action to be taken by an agent within an environment, the system comprising:
a state analysis unit operable to analyse a state of the environment;
a latency identification unit operable to identify a latency associated with the agent in the virtual environment; and
an action selection unit operable to select an action to be taken in dependence upon the state of the environment and the identified latency, the action being selected using a model trained by a system according to claim 1.

11. A system according to claim 10, wherein the identified latency is higher than a latency associated with the agent in the environment.

12. A method for training a model to select actions to be taken by an agent within an environment, the method comprising:
determining a state of the environment;
determining one or more respective latencies associated with interactions between the agent and the environment;
generating one or more actions to be performed by the agent in dependence upon the state, wherein actions are determined for each of the one or more determined latencies;
evaluating the success of each of the actions; and
generating the model in dependence upon identifying correlations between the success of each of the actions and the determined latency associated with those actions, so as to identify an action to be taken by the agent in dependence upon both a determined state and a latency.

13. A method for selecting an action to be taken by an agent within an environment, the method comprising:
analysing a state of the environment;
identifying a latency associated with the agent in the virtual environment; and
selecting an action to be taken in dependence upon the state of the environment and the identified latency, the action being selected using a model trained by a method according to claim 12.

14. Computer software which, when executed by a computer, causes the computer to carry out the method of claim 12 or claim 13.

15. A non-transitory machine-readable storage medium which stores computer software according to claim 14.
